Europäisches Patentamt

European Patent Office

Office européen des brevets

(19)

(11) **EP 0 381 464 B1**

(12) **EUROPEAN PATENT SPECIFICATION**

(45) Date of publication and mention
of the grant of the patent:
**05.03.1997 Bulletin 1997/10**

(51) Int Cl.⁶: **H04L 25/00**, H04B 10/06

(21) Application number: **90300978.5**

(22) Date of filing: **31.01.1990**

(54) **Transmitting high-bandwidth signals on coaxial cable**

Übertragung von Signalen mit hoher Bandbreite über ein Koaxialkabel

Transmission de signaux à haute largeur de bande sur câble coaxial

(84) Designated Contracting States:
**AT BE CH DE ES FR GB GR IT LI LU NL SE**

(30) Priority: **03.02.1989 US 306332**

(43) Date of publication of application:
**08.08.1990 Bulletin 1990/32**

(73) Proprietor: **DIGITAL EQUIPMENT CORPORATION**
**Maynard Massachusetts 01754-1418 (US)**

(72) Inventor: **Thacker, Charles P.**
**Palo Alto, CA 94302 (US)**

(74) Representative: **Goodman, Christopher et al**
**Eric Potter & Clarkson**
**St. Mary's Court**
**St. Mary's Gate**
**Nottingham NG1 1LE (GB)**

(56) References cited:
**US-A- 3 532 905       US-A- 3 676 783**
**US-A- 3 763 436       US-A- 3 798 608**
**US-A- 4 021 685       US-A- 4 179 664**

## Description

<u>FIELD OF THE INVENTION</u>

The present invention is directed to method and apparatus for transmitting high-bandwidth signals on coaxial cable, and more particularly to method and apparatus for decoding such signals utilizing a novel differential comparator technique.

<u>BACKGROUND OF THE INVENTION</u>

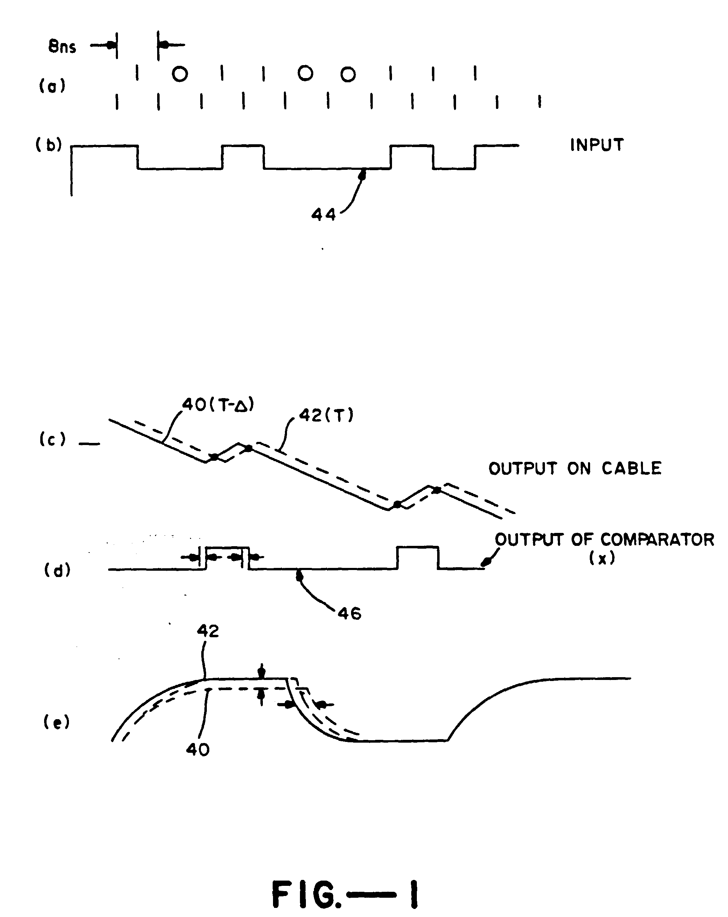

Point-to-point data communication over coaxial or fiber optic media can be implemented using a general purpose interface such as the AMD AM7968 taxi chip transmitter and AM7969 taxi chip receiver. These devices, whose characteristics are described in AMD Publication No. 07370, issued May 1987 and incorporated herein by reference, provide for very high speed point-to-point communications by loading data into the input side of the transmitter chip, and outputting it on the output side of the receiver chip, the chips being separated by a serial cable of indeterminate length. A complete link suitable for full-duplex communication would consist of two such serial data links, one for each direction. In a typical data communication scheme, data is transmitted over the serial cable using square wave pulses having different phases, each transition of the transmitted chips output signal corresponding to a one, and the lack of a transition corresponding to a zero. Thus, for example, referring to Fig. 1 at line a, if the objective is to transmit a bit stream comprising 101100111, then as shown at line b, each 1 is represented as a transition. The direction of the transition in this scheme is not relevant.

It has previously been realized that transmission of a long string of zeros would present a problem for the receiver, as the receiver must periodically see a transition in order to adjust the rate at which it samples the incoming data. An absence of transitions for too long a period of time will allow the receiver to drift because of an absence of inputs to the phased lock loop incorporated in the receiver channel, causing a loss of synchronization between the receiver and the transmitter. Therefore, the transmitting chip incorporates means for implementing a run length limited (RLL) coding technique that allows transmission of 100 megabit per second data on a 125 megabit per second channel. Each 8-bit byte to be transmitted is divided into two 4-bit nibbles. Each nibble is then transmitted as a 5-bit symbol, the 5-bit symbol being defined according to a coding scheme which will prevent the transmission of more than three successive zeros at any time in the transmitted data stream.

While there are 16 combinations of each 4-bit nibble that is to be encoded, there are 32 possible combinations of resultant 5-bit code. Therefore, in addition to minimizing the number of consecutive zeros in the output code, the output codes also have the characteristic that a minimum number of zeros appear at either end of the 5-bit output.

The maximum time between transitions is 3-bit times, and the minimum time between transitions being 1-bit time (a bit time being defined as 8 nanoseconds). Considering the actual frequencies of the signals on the wire, since the transmission rate is 125 megabits per second, the frequency is half of that or 62.5 megahertz at its maximum rate, the minimum rate being one fourth of that or about 13.1 megahertz.

In known data transmission schemes, two types of links may be constructed. One uses fiber optics which allows signal transmission over long distance with minimal attenuation, but at high cost. A second type also uses the above-described data transmission protocol, but using inexpensive coaxial cable as the transmission medium.

The problem to be addressed by the present invention is the potential loss of accuracy when a signal encoded according to the method described above is transmitted on coaxial cable. The result of such transition is attenuation of the transmitted signal. It is known that the signal will be distorted since the cable behaves as a low pass filter. Low frequency components (strings of zeros, without transitions) reach higher amplitudes than high frequency components (strings of ones, having transitions at an 8 nanosecond rate). For a sufficiently long cable having greater attenuation, a pattern consisting of ...00011000... cannot be reliably detected by simply comparing the voltage on the cable with a fixed slicing level (typically zero). This is because the initial zeros cause the signal to reach an amplitude that is greater than the amplitude of the opposite going pulse caused by two adjacent ones, the succession of two transitions at an 8 nanosecond rate preventing the pulse from reaching an amplitude which can be easily and reliably detected by a nominally established slicing level or threshold comparison.

One approach to this problem of overcoming the effects of passage of the information through a long cable would be preferential amplification of the high frequencies, using schemes similar to the precompensation utilized in recording techniques.

However, such a scheme would only work for one given length of cable, because the attenuation of the high frequency signal components of the transmitted data code varies with the length of the cable through which the transmission passes.

An alternative approach would be to use a technique wherein instead of looking at the magnitudes of the signals, the detection system looks at the transitions of the signals as is done in magnetic disc recording. The difficulty with implementing this approach in a coaxial cable data transmission scheme is that the frequency of transmission under consideration here is orders of magnitude faster than the rate at which data is being read in a magnetic recording scheme.

US-3532905 describes a detection system for analog pulses received from an optical scanning transducer in a system which optically scans printed characters, which analog pulses have leading and trailing edges of uniform duration but variable height. The system uses an attenuated and time shifted version of the analog pulses to intercept a desired point of detection (eg. 50% pulse height) on the leading or trailing slope of the input pulses.

## SUMMARY OF THE INVENTION

According to the present invention as defined in claims 1 and 8, a high bandwidth signal may be transmitted on a coaxial cable and accurately decoded by providing at the receiving end a receiving circuit which is not sensitive to the amplitude of the received signal, but is responsive only to the time at which transition of the signal occurs. According to the decoding method of the present invention, signals meeting the requirement are provided by differentiating the received signal which is transmitted in a code wherein zeros are indicated by a lack of transition, and ones are indicated by a transition, the differentiation providing an indication of the time at which the transition occurs. The signal which was originally transmitted is reconstructed by comparing the signal which is received at the end of the coaxial cable, with a signal received at a time $T+\Delta T$, in a standard differential comparator. The actual comparison can be expressed as $V_{OUT}(T) = K1*(V_{IN}(T) - K2*V_{IN}(T) - \Delta T)$. In this expression $V_{IN}$ is the received signal at the end of the serial cable, and $V_{OUT}$ is the signal provided to the receiver chip for decoding. K1 is the gain of the differential comparator, which is a standard chip. K2 is defined by the ratio of a pair of series connected resistors connected between one end of a delay line having a characteristic delay $\Delta T$ and ground. The connecting point between the two resistors is connected to one input of the comparator, the other input of the comparator being connected directly to the serial cable output. By choosing the sum of the two resistors to be equal to the characteristic line impedance of the coaxial cable, these resistors also provide the desired termination impedance for the cable. The output of the comparator is connected directly to the receiver chip.

Other features and advantages of the present invention will become apparent to a person of skill in the art who studies the following invention disclosure given with respect to these figures.

## BRIEF DESCRIPTION OF THE DRAWINGS

FIG. 1 is a timing diagram illustrating the coding technique, the squarewave format of the signals transmitted on the coaxial cable (1b), the output of the cable (1c), and the output of the comparator (1d); and
FIG. 2 is a block diagram of a circuit used to implement the method of the present invention.

## BRIEF DESCRIPTION OF A PREFERRED EMBODIMENT

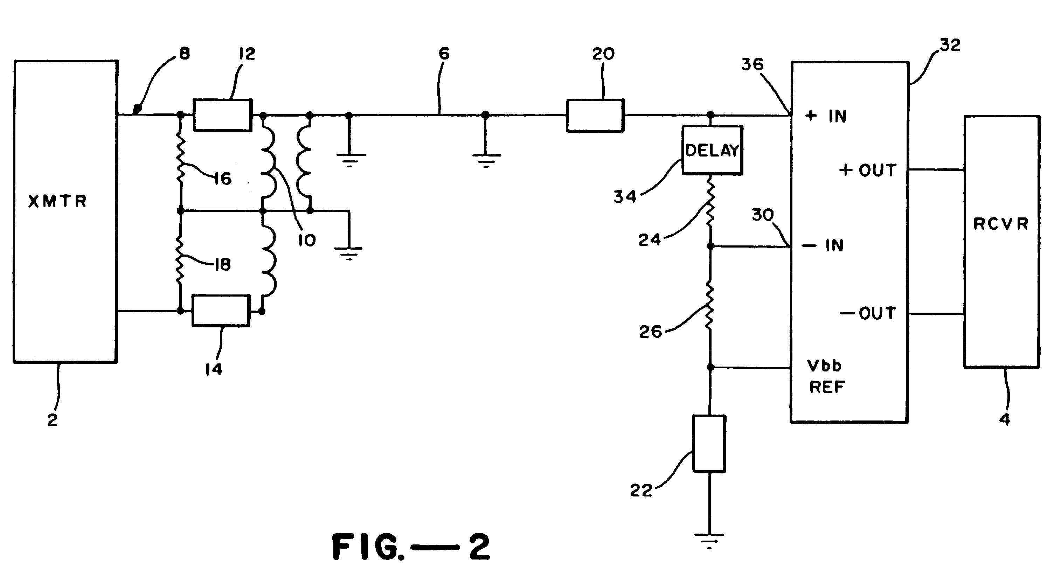

The implementation of the coaxial transmitting and receiving system of the present invention is shown, for example, in FIG. 2. The method implemented using this configuration will allow error-free recovery of RLL encoded data transmitted over long distances (several hundred feet) at high speeds (100 to 125 megabits per second) on inexpensive coaxial cable.

The transmitter and receiver circuits 2, 4 are standard integrated circuit chips of which typical examples are the AM7968 and AM7969 integrated circuit chips made by Advanced Micro Devices. These transmitter and receiver chips are general purpose interfaces for very high speed (4 to 12.5 megabyte per second, 40-125 megabaud serially) point-to-point communication over coaxial or fiber optic media. Each chip 2, 4 emulates a pseudo parallel register. The chip loads data into one side and outputs it on the other, in this case the output side 8 of transmitter 2 is separated from input side 9 of receiver 4 by a long serial link which in the present embodiment comprises a coaxial cable 6. The speed of a system is adjustable over a range of frequencies with parallel bus transfer rates from 4 megabytes per second to 12.5 megabytes per second.

The differential ECL signal produced at the output 8 of the transmitter chip 2 is transformer-coupled across transformer 10 to the coaxial cable 6. Capacitors 12 and 14 are provided for DC blocking at the output of the transmitter 2, and do not have a critical value. Resistors 16, 18 are coupled across the output of the transmitter to provide output pull-down for the transmitter ECL output; with the type of chips 2, 4 specified above, the resistors have a typical value of 220 $\Omega$.

At the receiver end of the cable 6, the capacitors 20, 22 are again provided for DC blocking. Resistors 24, 26 are connected from the end of cable 6 to ground to provide a voltage divider, the midpoint between the resistors being connected to an input 30 of a differential comparator 32 which is of standard design. The resistors are selected to provide a ratio R4/(R3 + R4) equal to K2 (approximately equal to 0.8) for a reason to be described below. The sum of the two resistors R3 and R4 is equal to the line impedance, in this case 75 $\Omega$. A delay line 34 having a selected time delay $\Delta T$ relative to the minimum time between transitions (for an intertransition time of 8 nanoseconds, a value for $\Delta T$ of 2 nanoseconds is appropriate) is coupled between an input 36 of the differential comparator and the voltage divider resistors R24, 26 described above. In this way, the transmission line 6 is terminated in its characteristic impedance of 75 $\Omega$, and its output is capacitively coupled to one of the comparator inputs 36. The output of the transmission line is also coupled to the delay line 34 and to the terminating resistors 24, 26; the signal, delayed by a time $\Delta T$, is tapped to feed input 30 of the comparator.

The observation underlying the method implemented in this invention is that the receiver chip 4 is not sensitive to the amplitude of the received signal (providing that the amplitude exceeds a minimum level) but is responsive only to the time at which transitions of the signal occur. The receiver chip 4 is specified as being able to tolerate transitions that occur ±3.2 nanoseconds from the nominally correct time (i.e. the time at which through transmitter generated the transition). Signals meeting this requirement are provided by differentiating the received signal that is shown at line 1c of FIG. 1 to provide an indication of the time at which the transition occurs. Differentiation can be thought of as a comparison of a signal with a time delayed representation of the signal. Therefore, in the present system, the differentiation is accomplished by comparing the received signal from the cable 6 at a time T with the value of the same received signal at a time $\Delta T$, the delay being provided by the delay line 34 coupled to the output at capacitor 20 of the cable 6.

The differentiated output of the cable is represented by the solid line 40 at FIG. 1c; the differentiated time delayed signal is represented by the dashed line 42. By detection in comparator 32 of the crossing point of the differentiated signals 40, 42, together with an inquiry as to whether the later signal is greater or less than the original signal T, the signal 44 (Fig. 1b) which constituted the input to the cable 6 can be reconstructed 46 as shown at FIG. 1d.

To reduce the susceptibility of the comparator circuit to noise, the actual comparison is

$$V_{OUT}(T) = K1 * (V_{IN}(T) - K2 * V_{IN} (T-\Delta T)$$

wherein $V_{IN}$ is the received signal, $V_{OUT}$ is the signal provided to the input 9 of the receiver chip 4, K1 is the gain of the comparator, and K2 is chosen to provide hysteresis and noise immunity. In the present implementation, the comparator has a gain of about 1600, and K2 is chosen to be approximately 0.8.

FIG. 1e illustrates a further potential difficulty which must be accounted for in the present design. If a very low frequency signal is being transmitted, that signal rises exponentially to a given maximum value as a function of the driver voltage. However, lacking an immediate transition, because of the short time $\Delta T$ relative to the time between transitions, as illustrated at FIG. 1e, both the original signal and the delayed signal will reach the same magnitude. Therefore, in this situation, there will be no difference between the time delayed signal and the regular signal over the 2 nanosecond time delay. Therefore, it is necessary to use the factor K provided by the resistors 24, 26 to provide a reduced amplitude version of the delayed signal for comparison to the present (time T) signal. Therefore, the comparison is always of a signal taken directly from the cable in an attenuated version at time T plus $\Delta T$. It should also be noted that by providing a higher gain comparator, decisions can be made with smaller voltages or with K closer to 1. However, if the gain in the comparator is reduced, then the ratio must be smaller.

Other alternatives to the present invention will become apparent to a person of skill in the art who studies this present invention disclosure. For example, the values of the resistors may change; the design the circuit coupling the cable to the input 9 of the receiver chip 4 may also be modified, while conforming to implement the present method. The scope of the present invention is defined only by the following claims.

**Claims**

1. Apparatus for accurately transmitting binary data over a high speed serial link having a transmitter and a receiver, wherein said binary data comprises a sequence of bits each representing one of a first value or a second value, said apparatus comprising:

   encoding means for encoding said binary data into serial pulse signals, wherein bits in said binary data representing said first value are encoded as a voltage transition in said serial pulse signals and bits in said binary data representing said second value are encoded as a stable voltage level in said serial pulse signals;
   transmitting means (2, 10-18) for transmitting said serial pulse signals;
   coupling means (20) for coupling said transmitted serial pulse signals to said receiver of said link so that said transmitted serial pulse signals can be received at receiver of said link;
   delay means (34) for delaying received serial signal pulses at said receiver of said link for a fixed period of time in such a way so that, corresponding to each transition of said encoded binary data, there is a signal crossing point between said received serial pulse signals and said time delayed received serial pulse signals; and
   comparison means (32) for comparing said received serial pulse signals and said time delayed received serial pulse signals and detecting said signal crossing point between said received serial pulse signals and said time delayed received serial pulse signals.

2. Apparatus as claimed in claim 1 including attenuating means (24) coupled between said delay means (34) and said comparison means (32) for attenuating said time delayed received serial pulse signals, whereby the magnitudes of said received serial pulse signals and said time delayed received serial pulse signals are different whereby said signal crossing point is clearly defined.

3. Apparatus as claimed in claim 2 wherein said attenuating means comprise means (24,26) for attenuating said time delayed signal by a value of about 0.8.

4. Apparatus as claimed in claim 2 wherein said comparison means (32) has a first input terminal (36) and a second input terminal (30), wherein said first input terminal is connected to said receiver of said link and wherein said delay means (34) comprises a delay line connected to said receiver of said link, said attenuating means comprising

first and second series connected resistors (24,26) connected between said delay line and a reference voltage,
a connection point intermediate said first and second resistors being connected to said second input terminal (30), whereby said time delayed attenuated signal is coupled to said second input terminal.

5. Apparatus as claimed in claim 1 wherein said link (6) is a coaxial cable.

6. Apparatus as claimed in claim 1 wherein said transmitting means includes means for converting said serial pulse signals into differential ECL signals for transmitting over said link.

7. Apparatus as claimed in claim 1, further comprising:

means (32) for reconverting the shape of said received serial pulse signals (40) back to that of said serial pulse signals (44); and
means for decoding said encoded binary data in response to said recovered serial pulse signals (46).

8. A method for accurately transmitting binary data over a high speed serial link having a transmitter and a receiver, wherein said binary data comprises a sequence of bits, each said bit representing one of a first value or a second value, said method comprising the steps of:

encoding said binary data into serial pulse signals, wherein bits in said binary data representing said first value are encoded as a voltage transition in said serial pulse signals and bits in said binary data representing said second value are encoded as a stable voltage level in said serial pulse signals;
transmitting said serial pulse signals;
coupling said transmitted serial pulse signals to said receiver of said link so that said transmitted serial pulse signals can be received at said receiver of said link;

delaying said received serial signal pulses at said receiver of said link for a fixed period of time in such a way so that, corresponding to each transition of said encoded binary data, there is a signal crossing point between said received serial pulse signals and said time delayed received serial pulse signals; and
comparing said received serial pulse signals and said time delayed received serial pulse signals and detecting the signal crossing point between said received serial pulse signals and said time delayed received serial pulse signals.

9. The method of claim 8 further including the step of:
attenuating said time delayed received serial pulse signals, whereby the magnitudes of said received serial pulse signals and said time delayed received serial pulse signals are different whereby said signal crossing point is clearly defined.

10. The method of claim 9, further comprising the steps of:

reconverting the shape of said received serial pulse signals back to that of said serial pulse signals; and
decoding said encoded binary data in response to said recovered serial pulse signals.

**Patentansprüche**

1. Einrichtung zur genauen Übertragung von binären Daten über eine serielle Hochgeschwindigkeits-Verbindungsleitung mit einem Sender und einem Empfänger, wobei die binären Daten eine Bitfolge umfassen, die jeweils einen ersten Wert oder einen zweiten Wert darstellt, und wobei die Einrichtung folgendes umfaßt:

eine Codiereinrichtung zum Codieren der binären Daten in serielle Pulssignale, wobei die Bits in den binären Daten, die den ersten Wert darstellen, als ein Spannungsübergang in den seriellen Pulssignalen codiert werden und die Bits in den binären Daten, die den zweiten Wert darstellen, als ein gleichbleibendes Spannungsniveau in den seriellen Pulssignalen codiert werden;
eine Übertragungseinrichtung (2, 10-18) zum Übertragen der seriellen Pulssignale;
eine Kopplungseinrichtung (20) zum Einkoppeln der übertragenen seriellen Pulssignale in den Empfänger der Verbindungsleitung, so daß die übertragenen seriellen Pulssignale am Empfänger der Verbindungsleitung empfangen werden können;
eine Verzögerungseinrichtung (34) zum Verzögern der empfangenen seriellen Pulssignale am Empfänger der Verbindungsleitung für eine festgelegte Zeitdauer auf solch eine Art, daß es entsprechend jedes Übergangs der codierten binären Daten zwischen den empfangenen seriellen Pulssignalen und den zeitverzögerten empfangenen Pulssignalen einen Signal-Kreuzungspunkt gibt; und

eine Vergleichseinrichtung (32) zum Vergleichen der empfangenen seriellen Pulssignale mit den zeitverzögerten empfangenen seriellen Pulssignalen und zum Festlegen des Signal-Kreuzungspunkts zwischen den empfangenen seriellen Pulssignalen und den zeitverzögerten empfangenen seriellen Pulssignalen.

2. Einrichtung nach Anspruch 1 mit einer Dämpfungseinrichtung (24), die zwischen die Verzögerungseinrichtung (34) und die Vergleichseinrichtung (32) geschaltet ist, zum Dämpfen der zeitverzögerten empfangenen seriellen Pulssignale, wodurch die empfangenen seriellen Pulssignale und die zeitverzögerten empfangenen seriellen Pulssignale in der Größe verschieden werden, wodurch der Signal-Kreuzungspunkt klar definiert wird.

3. Einrichtung nach Anspruch 2, wobei die Dämpfungseinrichtung Einrichtungen (24, 26) zum Dämpfen des zeitverzögerten Signals um einen Wert von ungefähr 0,8 umfaßt.

4. Einrichtung nach Anspruch 2, wobei die Vergleichseinrichtung (32) einen ersten Eingangsanschluß (36) und einen zweiten Eingangsanschluß (30) aufweist, wobei der erste Eingangsanschluß mit dem Empfänger der Verbindungseinrichtung verbunden ist und die Verzögerungseinrichtung (34) eine Verzögerungsleitung aufweist, die mit dem Empfänger der Verbindungsleitung verbunden ist,

wobei die Dämpfungseinrichtung folgendes umfaßt:

erste und zweite in Reihe geschaltete Widerstände (24, 26), die zwischen die Verzögerungsleitung und eine Bezugsspannung geschaltet sind,

einen Verbindungspunkt zwischen den ersten und zweiten Widerständen, der mit dem zweiten Eingangsanschluß (30) verbunden ist, wodurch das zeitverzögerte gedämpfte Signal an den zweiten Eingangsanschluß angelegt wird.

5. Einrichtung nach Anspruch 1, wobei die Verbindungsleitung (6) ein Koaxialkabel ist.

6. Einrichtung nach Anspruch 1, wobei die Übertragungseinrichtung eine Einrichtung zum Umwandeln der seriellen Pulssignale in differenzielle Emittergekoppelte Logiksignale zur Übertragung über die Verbindungsleitung aufweist.

7. Einrichtung nach Anspruch 1, die des weiteren folgendes umfaßt:

eine Einrichtung (32) zur Rückumwandlung der Form der empfangenen seriellen Pulssignale (40) in die Form der seriellen Pulssignale (44); und

eine Einrichtung zum Decodieren der codierten binären Daten in Reaktion auf die zurückgewonnenen seriellen Pulssignale (46).

8. Verfahren zur genauen Übertragung von binären Daten über eine serielle Hochgeschwindigkeits-Verbindungsleitung mit einem Sender und einem Empfänger, wobei die binären Daten eine Bitfolge umfassen, wobei jedes Bit entweder einen ersten oder einen zweiten Wert darstellt, und das Verfahren die folgenden Schritte umfaßt:

Codieren der binären Daten in serielle Pulssignale, wobei die Bits in den binären Daten, die den ersten Wert darstellen, als Spannungsübergang in den seriellen Pulssignalen codiert werden und die Bits in den binären Daten, die den zweiten Wert darstellen, als gleichbleibendes Spannungsniveau in den seriellen Pulssignalen codiert werden;

Übertragen der seriellen Pulssignale;

Einkoppeln der übertragenen seriellen Pulssignale in den Empfänger der Verbindungsleitung, so daß die übertragenen seriellen Pulssignale am Empfänger der Verbindungsleitung empfangen werden können;

Verzögern der empfangenen seriellen Pulssignale am Empfänger der Verbindungsleitung für eine festgelegte Zeitdauer in einer solchen Weise, daß es entsprechend eines jeden Übergangs der codierten binären Daten zwischen den empfangenen seriellen Pulssignal und dem zeitverzögerten empfangenen seriellen Pulssignal einen Signal-Kreuzungspunkt gibt; und

Vergleichen der empfangenen seriellen Pulssignale mit den zeitverzögerten empfangenen seriellen Pulssignalen und Festlegen des Signal-Kreuzungspunkts zwischen den empfangenen seriellen Pulssignalen und den zeitverzögerten empfangenen seriellen Pulssignalen.

9. Verfahren nach Anspruch 8, das des weiteren den folgenden Schritt enthält:

Dämpfen des zeitverzögerten empfangen seriellen Pulssignals, wodurch die empfangenen seriellen Pulssignale und die zeitverzögerten empfangenen seriellen Pulssignale in ihrer Größe unterschiedlich werden, wodurch der Signal-Kreuzungspunkt klar definiert wird.

10. Verfahren nach Anspruch 9, das des weiteren die folgenden Schritte umfaßt:

Rückumwandlung der Form der empfangenen seriellen Pulssignale in die Form der seriellen Pulssignale; und
Decodieren der codierten binären Daten in Reaktion auf die wiedergewonnenen seriellen Pulssignale.

## Revendications

1. Dispositif pour transmettre avec précision des données binaires sur une liaison série à vitesse élevée ayant un émetteur et un récepteur, dans lequel lesdites données binaires comprennent une séquence de bits représentant chacun une valeur parmi une première valeur et une seconde valeur, ledit dispositif comprenant:

des moyens de codage pour coder lesdites données binaires en des signaux impulsionnels série, dans lesquels des bits dans lesdites données binaires représentant ladite première valeur sont codés sous la forme d'une transition de tension dans lesdits signaux impulsionnels série et des bits dans lesdites données binaires représentant ladite seconde valeur sont codés sous la forme d'un niveau de tension stable dans lesdits signaux impulsionnels série;
des moyens de transmission (2, 10-18) pour transmettre lesdits signaux impulsionnels série;
des moyens de couplage (20) pour coupler lesdits signaux impulsionnels série transmis audit récepteur de ladite liaison, de façon à ce que lesdits signaux impulsionnels série transmis puissent être reçus dans le récepteur de ladite liaison;
des moyens de retard (34) pour retarder les impulsions du signal série reçues dans ledit récepteur de ladite liaison d'une durée fixe de telle manière que, en correspondance avec chaque transition desdites données binaires codées, il existe un point d'intersection de signaux entre lesdits signaux impulsionnels série reçus et lesdits signaux impulsionnels série reçus retardés; et
des moyens de comparaison (32) pour comparer lesdits signaux impulsionnels série reçus et lesdits signaux impulsionnels série reçus retardés et détecter ledit point d'intersection de signaux entre lesdits signaux impulsionnels série reçus et lesdits signaux impulsionnels série reçus retardés.

2. Dispositif selon la revendication 1, incluant des moyens d'atténuation (24) couplés entre lesdits moyens de retard (34) et lesdits moyens de comparaison (32) pour atténuer lesdits signaux impulsionnels série reçus retardés, de façon que les amplitudes desdits signaux impulsionnels série reçus et desdits signaux impulsionnels série reçus retardés soient différentes pour que ledit point d'intersection de signaux soit clairement défini.

3. Dispositif selon la revendication 2, dans lequel lesdits moyens d'atténuation comprennent des moyens (24, 26) pour atténuer ledit signal retardé d'une valeur environ égale à 0,8.

4. Dispositif selon la revendication 2, dans lequel lesdits moyens de comparaison (32) possèdent une première borne d'entrée (36) et une seconde borne d'entrée (30), dans lequel ladite première borne d'entrée est connectée audit récepteur de ladite liaison et dans lequel lesdits moyens de retard (34) comprennent une ligne à retard connectée audit récepteur de ladite liaison,
lesdits moyens d'atténuation comprenant

des première et seconde résistances connectées en série (24, 26) connectées entre ladite ligne à retard et une tension de référence,
un point de connexion entre lesdites première et seconde résistances étant connecté à ladite seconde borne d'entrée (30), de façon que ledit signal atténué retardé soit couplé à ladite seconde borne d'entrée.

5. Dispositif selon la revendication 1, dans lequel ladite liaison (6) est un câble coaxial.

6. Dispositif selon la revendication 1, dans lequel lesdits moyens de transmission incluent des moyens pour convertir lesdits signaux impulsionnels série en des signaux ECL différentiels destinés à une transmission sur ladite liaison.

7. Dispositif selon la revendication 1, comprenant en outre:

des moyens (32) pour reconvertir la forme desdits signaux impulsionnels série reçus (40) en la forme desdits signaux impulsionnels série (44); et
des moyens pour décoder lesdites données binaires codées en réponse auxdits signaux impulsionnels série récupérés (46).

8. Procédé pour transmettre avec précision des données binaires sur une liaison série à vitesse élevée ayant un émetteur et un récepteur, dans lequel lesdites données binaires comprennent une séquence de bits, chacun desdits bits représentant une valeur parmi une première valeur et une seconde valeur, ledit procédé comprenant les étapes consistant à:

coder lesdites données binaires en des signaux impulsionnels série, des bits dans lesdites données binaires représentant ladite première valeur étant codés sous la forme d'une transition de tension dans lesdits signaux impulsionnels série et des bits dans lesdites données binaires représentant ladite seconde valeur étant codés sous la forme d'un niveau de tension stable dans lesdits signaux impulsionnels série;
transmettre lesdits signaux impulsionnels série;
coupler lesdits signaux impulsionnels série transmis, audit récepteur de ladite liaison, de façon à ce que lesdits signaux impulsionnels série transmis puissent être reçus dans ledit récepteur de ladite liaison;
retarder lesdites impulsions de signal série reçu, dans ledit récepteur de ladite liaison d'une durée fixe de telle manière que, en correspondance avec chaque transition desdites données binaires codées, il existe un point d'intersection de signaux entre lesdits signaux impulsionnels série reçus et lesdits signaux impulsionnels série reçus retardés; et
comparer lesdits signaux impulsionnels série reçus et lesdits signaux impulsionnels série reçus retardés et détecter le point d'intersection de signaux entre lesdits signaux impulsionnels série reçus et lesdits signaux impulsionnels série reçus retardés.

9. Procédé selon la revendication 8, incluant également l'étape consistant à: atténuer lesdits signaux impulsionnels série reçus retardés, de façon que les amplitudes desdits signaux impulsionnels série reçus et desdits signaux impulsionnels série reçus retardés soient différentes pour que ledit point d'intersection de signaux soit clairement défini.

10. Procédé selon la revendication 9, comprenant également les étapes consistant à:

reconvertir la forme desdits signaux impulsionnels série reçus en la forme desdits signaux impulsionnels série; et
décoder lesdites données binaires codées en réponse auxdits signaux impulsionnels série récupérés.

8ns

(a)

(b) INPUT

44

(c)

40(T-Δ)    42(T)

OUTPUT ON CABLE

OUTPUT OF COMPARATOR
(x)

(d)

46

42

(e)

40

FIG.—1

FIG.—2